(19) **Europäisches Patentamt**
**European Patent Office**
**Office européen des brevets**

(11) **EP 2 524 510 B1**

(12) **EUROPEAN PATENT SPECIFICATION**

(45) Date of publication and mention
of the grant of the patent:
**01.05.2019 Bulletin 2019/18**

(21) Application number: **10702936.5**

(22) Date of filing: **13.01.2010**

(51) Int Cl.:
*H04N 13/183* (2018.01)    *H04N 13/161* (2018.01)

(86) International application number:
**PCT/US2010/000077**

(87) International publication number:
**WO 2011/087470 (21.07.2011 Gazette 2011/29)**

(54) **SYSTEM AND METHOD FOR COMBINING 3D TEXT WITH 3D CONTENT**

SYSTEM UND VERFAHREN ZUR KOMBINATION VON 3D-TEXTEN MIT 3D-INHALTEN

SYSTÈME ET PROCÉDÉ DE COMBINAISON D'UN TEXTE TRIDIMENSIONNEL AVEC UN CONTENU TRIDIMENSIONNEL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.11.2012 Bulletin 2012/47**

(73) Proprietor: **InterDigital Madison Patent Holdings 75017 Paris (FR)**

(72) Inventor: **ZHANG, Tao**
**Plainsboro**
**New Jersey 08536 (US)**

(74) Representative: **Vidon Brevets & Stratégie**
**16B, rue de Jouanet**
**BP 90333**
**35703 Rennes Cedex 7 (FR)**

(56) References cited:
**EP-A2- 0 735 784        WO-A1-2008/115222**
**WO-A1-2009/145749      WO-A1-2010/064118**
**WO-A2-2008/038205      JP-A- 2004 274 125**

**Description**

**CROSS-REFERENCE TO RELATED APPLICATIONS**

This invention is related to a U.S. Patent Application Attorney Docket No. PU090183 entitled "*Method For Distinguishing A 3D Image From A 2D Image And For Identifying The Presence Of A 3D Image Format By Feature Correspondence Determination*", commonly assigned to the same assignee hereof.

**FIELD OF THE INVENTION**

This present invention relates to image processing and display systems, and more particularly, to a system and method for combining text in a three-dimensional (3D) manner with associated 3D content.

**BACKGROUND OF THE INVENTION**

In recent years, 3D content such as movies and the like have been produced in increasing numbers. This trend is expected to continue into the foreseeable future. Similarly to its 2D content counterpart, the 3D content is generally accompanied by 2D text information such as subtitles or closed-captioning. But, unlike its 2D content counterpart, which displays the 2D contents at the same depth, 3D contents are generally displayed at different depths to create the 3D viewing environment. Since the 3D contents are displayed at different depths, it becomes problematic to decide when, where, and how to place any accompanying text information.
It has been proposed that two-dimensional (2D) text information be used in connection with their associated 3D contents. While such a technique appears to be a straightforward addition of the text and contents, it does not afford any accurate control for placement of the text information at a predetermined or known depth with respect to the 3D content.
Another known technique would permit placement of 3D text at a fixed depth for viewing, such as in TV plane, for all frames. Several problems arise from this technique. For example, if one considers that the 3D contents are captured by parallel cameras, the resulting TV plane will be at infinity. This, in turn, causes any 3D text always to appear behind the content scene for all frames. In order to adjust the depth of the text in the 3D content so that it can be viewed properly, it is clear that every frame of the content must be tested to determine whether the depth of the text is viewable as intended. Such a testing technique is time consuming, subjective, and inefficient.
In co-pending, commonly-owned patent application identified as PCT/US2007/025947, 3D text was added to 3D contents in such a way as to avoid obstructing the 3D effects in the content without causing any apparent visual fatigue. In this cited application, it is postulated that the depth information for each image is available via an associated depth map. The method proposed in the cited application adjusts the depth value for any inserted text to match the largest depth value for a given depth map.
Such a method can have several deficiencies. First, the depth information, whether included in an associated depth map or in some other form, may not be available from the content producer. No matter how the 3D contents are generated, the availability of depth information depends on whether the information is captured, in the first place, and then whether the producer is willing to include and share that information, if it is available at all. Moreover, unless the depth is captured in the same time at acquisition, depth information is generally difficult to compute from left and right views of the 3D content. The left and right views are usually obtained from the main stream 3D content captured using two cameras.
Another problem with the above method is that the associated depth map is generally scaled to a fixed range for each frame. Such scaling hampers the ability to place the 3D text information accurately at the same depth value for all frames.
In addition to the problems with the prior art techniques described above, no technique is presently known to exist for allowing placement of 3D text information in a location at the discretion of a producer or even the ultimate viewer of the 3D content and text, based solely on the content alone without relying on any ancillary image information and at a time after the 3D content and accompanying text information have been generated or packaged, such as during post-production, for example, an off-line operation performed generally outside of real time or during content viewing (e.g., an on-line operation performed generally in real time).

**SUMMARY OF THE INVENTION**

These and other deficiencies of the prior art are addressed by various embodiments of the present invention by determining parallax information from the 3D content and by using such parallax information together with one or more requirements supplied by a user or producer for best positioning text in a 3D manner into associated 3D content. The determination of text position can be performed in real-time on the arriving image content stream as an on-line operation or in a non-real time mode on the entirety of the image content as an off-line operation. The parallax information includes a parallax set of values and a parallax range across all corresponding features detected in a 3D image, an intersection of the parallax ranges for all the processed image content, and a union of the parallax ranges to show a common parallax range for all processed frames. Examples of requirements include, but are not limited to, text placement at a predetermined parallax value for the entire frame, text placement at a predetermined parallax value for a selected region of the entire frame, text placement that avoids blocking content and that limits the amount of parallax change across images to maintain a comfortable viewing experience, and the like.

In one embodiment of the present invention, a method for combining text with three-dimensional (3D) image content wherein a resulting image is capable of being displayed by a 3D display device, includes receiving both a 3D image content including at least one 3D image and text associated with the at least one 3D image, wherein the at least one 3D image includes a first view and a second view, extracting parallax information from the at least one 3D image, determining a position for the text in the first view and determining a position for the text in the second view, wherein the position in the second view is offset relative to the position in the first view of the corresponding 3D image by an amount based, at least in part, on the parallax information

## BRIEF DESCRIPTION OF THE DRAWINGS

The teachings of the present invention can be readily understood by considering the following detailed description in conjunction with the accompanying drawings, in which:

FIG. 1 depicts a system for combining 3D content and associated text in accordance with an embodiment of the present invention;
FIG. 2 depicts a relationship between screen parallax and perceived depth for several different examples of images in accordance with an embodiment of the present invention;
FIG. 3 depicts a flow chart of a method for determining, off-line, a best parallax value for use in displaying text with 3D content in accordance with an embodiment of the present invention;
FIG. 4 depicts a flow chart of a method for determining, on-line, a best parallax value for use in displaying text with 3D content in accordance with an embodiment of the present invention; and
FIG. 5 depicts a simplified process for feature correspondence and parallax value determination for use in the methods of FIG. 3 and FIG 4.

It should be understood that the drawings are for purposes of illustrating the concepts of the invention and are not necessarily the only possible configuration for illustrating the invention. To facilitate understanding, identical reference numerals have been used, where possible, to designate identical elements that are common to the figures.

## DETAILED DESCRIPTION OF THE INVENTION

Embodiments of the present invention advantageously provide a system and method for combining text with three-dimensional (3D) content using parallax information extracted from the 3D content. Although embodiments of the present invention are described primarily within the context of a video processor and display environment, the specific embodiments of the present invention should not be treated as limiting the scope of the invention. It will be appreciated by those skilled in the art and informed by the teachings of the present invention that the concepts of the present invention can be advantageously applied in substantially any video-based processing environment such as, but not limited to, television, transcoders, video players, image viewers, set-top-box or any software-based and/or hardware-based implementations useful for combining text with 3D content.

It should be understood that the elements shown in the figures may be implemented in various forms of hardware, software, or combinations thereof. Preferably, these elements are implemented in a combination of hardware and software on one or more appropriately programmed general-purpose devices, which may include a processor, memory and input/output interfaces.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, may also be included in the realization of the invention. For example, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo-code, and the like represent various processes which may be substantially represented in computer readable media and so executed by a computer or processor, whether or not such computer or processor is explicitly shown herein.

Finally, all examples and conditional language recited herein are intended to aid the reader in understanding the principles of the invention and the concepts contributed by the inventor for furthering the state of the art. The principles of the present invention are therefore to be construed as being without limitation or restriction to such specifically recited examples and conditions.

The use of text in two-dimensional (2D) video is known by those skilled in the art. The current interest in three-dimensional (3D) video and film has created the need for techniques to add text to 3D content. Therefore, a need exists for techniques for optimizing the insertion of text into 3D content such that the added text does not obstruct the 3D effects in the 3D content and so that it is visually pleasing to the viewer when the 3D content is viewed.

According to the principles of the various embodiments of the present invention disclosed herein, the combination of text information with 3D content can be performed off-line or on-line. The term "off-line" is intended to encompass those operations that are performed at a time that is outside of a real-time viewing event such as a post-production operation. The term "on-line" is intended to encompass real-time viewing events on a TV or content player when the content is being shown to a user, for example.

In off-line processing, such as in the post-production stage, 3D text information including the text itself, its intended position, and image disparity or parallax information for the 3D content, can be assembled and/or determined as the frames are being processed usually after the fact in a studio. Examples of content generally suitable for offline processing include television game shows, videotapes or DVDs of movies, corporate videotapes including training videos, movies provided via cable, satellite, or Internet providers, or the like. That text information can be stored in files such as closed caption or metadata associated with the content for later use such as displaying the content to a user.

In on-line processing, such as during a real-time viewing event on a TV or the like, 3D text information can be generated before showing the associated content. The real-time viewing event can include television news shows, live seminars, and sports events, for example. The text is available from associated caption or subtitle files, for example, or it can be provided via a script. Alternatively, the text can be generated in real-time. Depth or disparity information is not available from any file, so, in one embodiment, it must be generated to accomplish the proper combination of the text with the 3D content for display to the viewer in real-time.

In an example of subtitling or captioning, the text of the subtitle or caption is usually created on a computer, and then it is synchronized to the video content using time codes. The text and the video content are then transferred to one or more files before the event is broadcast or distributed.

Text information can be created and distributed by conventional processes known to those persons skilled in the art. For example, one conventional process involves creating a text file from a script. The text file includes three values: a start frame, an end frame, and the text that spans the frames from the start frame to and including the end frame. For this example, the text is then repeated in all the frames from start frame to end frame. Embodiments of the present invention are directed towards determining parallax parameters together with any other requirements to position the location of the text at an appropriate perceived depth value for the associated video frame.

In the descriptions herein, reference is made to text information of simply text that can be combined with 3D content. These terms can be used interchangeably along with other identified variations without any intended limitation or loss of generality and meaning. It should be appreciated that there are at least two types of text that can be added to content video in accordance with embodiments of the present invention, namely, subtitles and captions. Subtitles are generally intended for hearing audiences and captions are usually intended for deaf audiences. Subtitles can translate the dialog from the content into a different language, but rarely do subtitles show all of the audio information. Captions tend to include all the information from the audio portion of the content. For example, captions show sound effects in the content, such as a "phone ringing" or "footsteps", while subtitles will not include or display that information from the audio.

Closed captions are captions that are hidden in a video signal, invisible without a special decoder. The closed captions are hidden, for example, in line 21 of the vertical blanking interval (VBI) of the video signal. Open captions are captions that have been decoded, so they have become an integral part of the television picture, like subtitles in a movie. In other words, open captions cannot be turned off. The term "open captions" is also used to refer to subtitles created with a character generator.

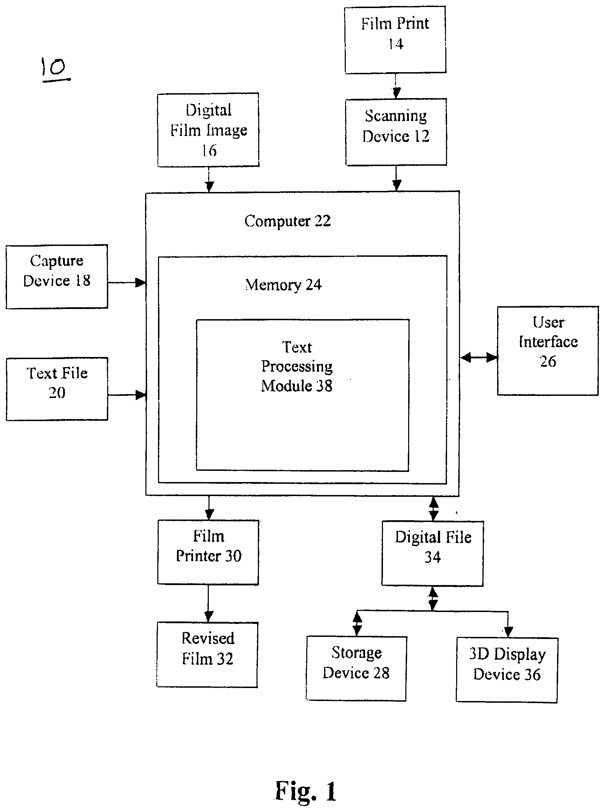

FIG. 1 depicts a system 10 for combining 3D content and associated text in accordance with an embodiment of the present invention. In FIG. 1, a scanning device 12 is provided for scanning film prints 14, such as camera-original film negatives, into a digital format such as Cineon-format or Society of Motion Picture and Television Engineers (SMPTE) Digital Picture Exchange (DPX) files. The scanning device 12 can comprise a telecine or the like that will generate a video output from film such as an Arri LocPro™ with video output, for example. Alternatively, files from the post-production process or digital cinema 16, such as files already in computer-readable form, can be used directly. Potential sources of computer-readable files are AVID™ editors, DPX files, D5 tapes, and the like. Furthermore, 3D content in the form of' stereoscopic content or 2D images and associated depth maps, for example, can be provided by a capture device 18. Text files 20, including subtitle and caption files, can be created from a script and provided to the system by a subtitle supervisor.

The scanned film prints, digital film images and/or 3D content as well as the text files can be input to a post-processing device 22, for example a computer. In one embodiment of the present invention, the post-processing device 22 can be implemented on any of the various known computer platforms having hardware such as one or more central processing units (CPU), memory 24 such as random access memory (RAM) and/or read only memory (ROM) and input/output (I/O) user interface(s) 26 such as a keyboard, cursor control device (e.g., a mouse or joystick) and display device. The computer platform also includes an operating system and micro instruction code. In accordance with alternative embodiments of the present invention, the various processes and functions described herein can either be part of the micro instruction code or part of a software application program (or a combination thereof) which is executed via the operating system. In addition, various other peripheral devices can be connected to the computer platform by various interfaces and bus structures, such a parallel port, serial port or universal serial bus (USB). Examples of such, other peripheral devices can include additional storage devices 28 and a printer 30. The printer 30 can be used for printing a revised version of the film 32, such as a stereoscopic version of the film, wherein text has been inserted into a scene or a plurality of scenes using the text insertion techniques described further below. Additionally, a digital file 34 of the revised film or video can be generated and provided to a 3D display device so the 3D content and inserted text can be viewed by a viewer. Alternatively, the digital file 34 can be stored on storage device 28.

In the embodiment of Fig. 1, a software program includes a text processing module 38 stored in the memory 24 for combining text with 3D content as discussed in further detail below.

There are a number of content formats and display types for handling and displaying 3D content. These include stereoscopic, holographic, and autostereoscopic among others. The most common is stereoscopic displays, which requires active or passive glasses. Autostereoscopic displays, using for example Lenticular, do not require glasses and are becoming more available for both home and professional entertainments. Many of these displays operate on the 2D + depth format. In this format, the 2D video and the depth information are combined to create the 3D effect.

Three-dimensional (3D) images exist today in many different digital formats. Generally 3D contents include a pair of images or views initially generated as separate stereo images (or views). It will be appreciated that the terms "stereo images" and "stereo views" and the terms "images" and "views" can each be used interchangeably without loss of meaning and without any intended limitation. Each of these images can be encoded. In order to store or distribute or display the 3D image, the contents of the two stereo images such as a left image and a right image are combined into a single image frame so that each frame will represent the entire 3D image instead of using two separate stereo images, each in their own frame or file.

It was mentioned above that if depth can be computed easily, the insertion of 3D subtitle will be easy. But, since an accurate depth map of sufficient density is difficult and time consuming, at best, to compute, a user is forced to attempt to find alternative methods for determining the placement of text information in 3D content. According to the principles of the present invention, it has been found that screen parallax information is useful and a suitable alternative to the direct use of depth for determining the placement of text in 3D content.

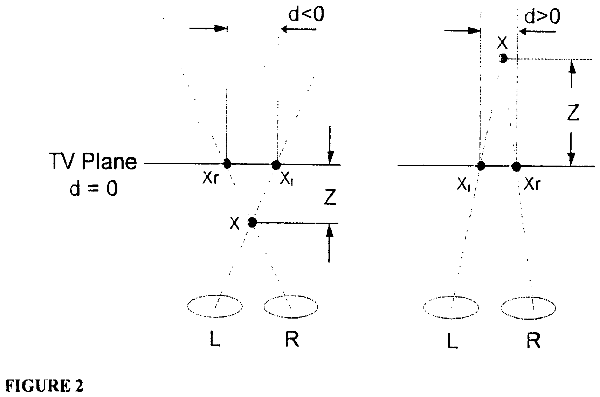

FIG. 2 depicts a relationship between screen parallax and perceived depth for several different examples of images in accordance with an embodiment of the present invention. In FIG. 2, $X_l$ is the position of a point in left view L, $X_r$ is the position of the corresponding point in the right view R, and X is position of the perceived image as seen by the viewer. Screen parallax is then denoted by d and perceived depth is denoted by Z.

On the left side of FIG. 2, the image X is shown at a perceived depth Z consistent with negative parallax. On the right side of FIG. 2, the image X is shown at a perceived depth Z consistent with positive parallax.

As shown in FIG. 2, if $X_l$ is defined as a projected image of a point in the left view L and if $X_r$ is defined as the corresponding projected image of the same point in the right view R, the screen parallax d is defined according to equation one (1), which follows:

$$d = \text{horizontal position of } X_r - \text{horizontal position of } X_l. \tag{1}$$

In the construction of equation 1, it is assumed that the two cameras producing the left and right views, L and R, are arranged in a side-by-side configuration with some amount of horizontal separation there between. This side-by side configuration is also intended to cover the situation where the cameras exhibit a vertical separation due to their vertical arrangement with one camera over the other. When cameras are arranged in a vertical or top-bottom configuration, then the equation would be correspondingly changed so that the screen parallax would be defined according to equation two (2), which follows:

$$d= \text{vertical position of } X_r - \text{vertical position of } X_l. \qquad (2)$$

In equation (2) above, when d is positive (>0), the perceived image is located behind the screen (i.e., behind the TV plane) and the condition is one of positive parallax; when d is zero (=0), the perceived image is located on the screen and the condition is one of no parallax; and when d is negative (<0), the perceived image is located in front of the screen and the condition is one of negative parallax.

From experimental practice, it appears reasonable to conclude that screen parallax d is related to perceived depth. Perceived depth is the depth a viewer perceives when viewing the 3D content as shown in FIG. 2. Perceived depth is related to and clearly different from real depth. Perceived depth generally has a substantially similar depth rank ordering to such an ordering for real depth. However, the amount in depth is subject to change as a result of projective transformation of the cameras, for example. In order to understand this point, it is assumed that if points A, B, and C in one frame exhibit rank ordering for real depths as follows,

realDepth(A) > real Depth(B) > realDepth(C),

then it is expected that the rank ordering of perceived depths will be as follows,

perceivedDepth(A) > perceivedDepth(B) > perceivedDepth(C).

As explained above, the actual distance between these points will not be maintained generally in the transition from real depth to perceived depth. These relationships are intended to be maintained within the same frame. It is not necessarily expected that these relationships will remain for the same points A, B, and C across different frames.

The exact relation between screen parallax and real depth is complex and not easily determined. When the left and right views are captured by devices whose viewing axes are parallel, the relationship between screen parallax and real depth is found to be substantially linear. Otherwise, when the left and right views are captured by devices whose viewing axes are not parallel such as when they are in a toed-in relationship, the relationship between screen parallax and real depth is found to be substantially nonlinear. From experimental practice herein, it is found that the relationship between screen parallax and perceived depth is always linear regardless of the orientation of the left and right capturing devices. Based on this experimental practice, it has been found that the larger the absolute value of the screen parallax (that is, the larger the magnitude of the screen parallax), the larger the absolute value of perceived depth (the further away from the screen).

Perceived depth is the depth experienced by the viewer. Real depth is not actually experienced by the viewer. Based upon this realization, it has been determined herein that it is possible and even preferable to use screen parallax, and therefore perceived depth, as an effective way to determine suitable depth values for placement of text in 3D context in accordance with the principles of the present invention.

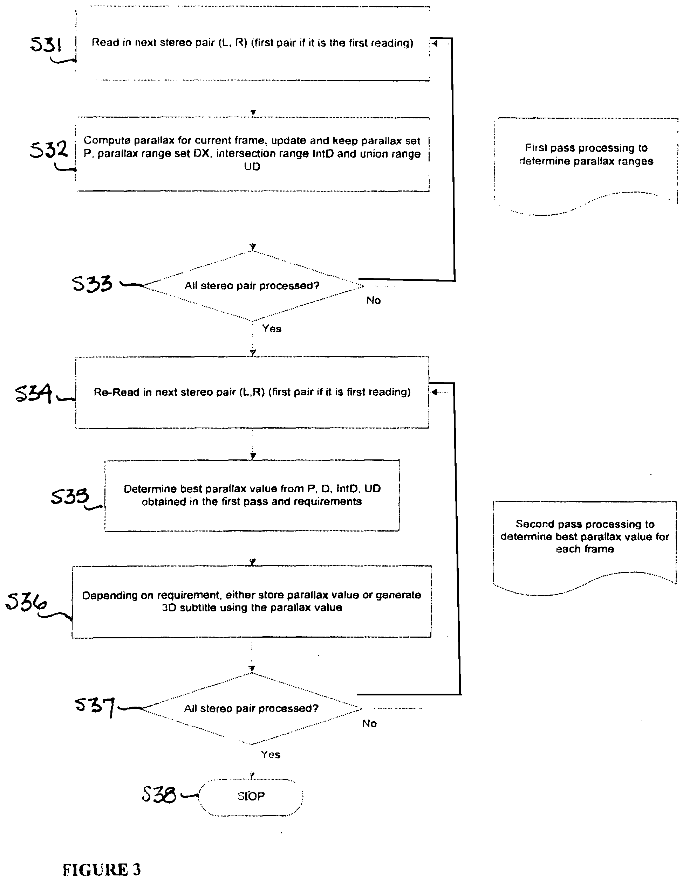

FIG. 3 depicts a flow chart of a method for determining, off-line, a best parallax value for use in displaying text with 3D content in accordance with an embodiment of the present invention. As described above, an off-line method is appropriate for use in, for example, a post-production stage. The off-line method of FIG. 3 is depicted as having two passes. A first pass processes each frame to determine certain parallax information therefor. This parallax information includes a possible set and range of parallax values and a common range of parallax values. The second pass uses the collected parallax information combined with a set of one or more desired requirements from a producers or user to select a best parallax value that meets the producer/user requirements for ultimate placement of the 3D text in the 3D content.

A requirement generally provides a condition that is to be attained for text placement. Requirements are supplied by either the producer or the user or other individuals associated with the content. For example, it can be required that the text information is to be placed at a predetermined parallax value so that the perceived depth in front of the screen appears to be substantially fixed in all the frames. Other examples of requirements include, but are not limited to, text placement at a predetermined parallax value for the entire frame, text placement at a predetermined parallax value for a selected region of the entire frame, text placement that avoids blocking content and that limits the amount of parallax change across images to maintain a comfortable viewing experience, and the like.

In order to achieve an exemplary requirement that places the text at a predetermined value, such as a maximum perceived depth, the best parallax value meeting this requirement within the limits of the image or group of images being viewed would be d=UDmin as shown and described in further detail in the equations below. Of course, different requirements will result in different parallax values being selected. It is contemplated that one or more default requirements can be set by manufacturers or set even by users for use in the off-line processing. In alternate embodiments of the present invention, the requirements described above are equally applicable to on-line processing.

In the method depicted in FIG. 3, the first pass includes steps S31, S32, and S33, whereas the second pass includes steps S34, S35, S36, S37, and S38. As noted in FIG. 3, the first pass performs processing on the frames to determine parallax ranges. The second pass performs processing on the parallax information from the first pass to determine a best parallax value for each frame.

The method of FIG. 3 begins at step S31, which receives a stereo pair of image information. Typically, the stereo pair that is read into the step includes a left view and a right view, as described above. The stereo pair is defined in the method as pair (L,R). The method then proceeds to step S32.

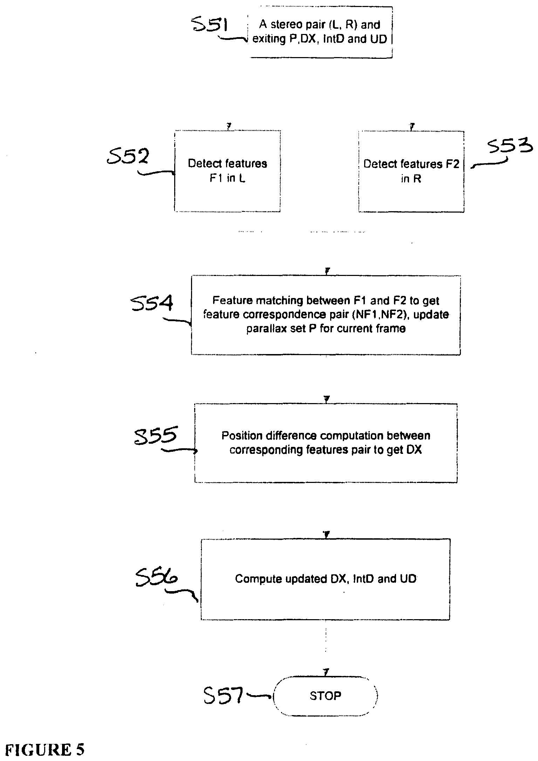

At step S32, the necessary processing is performed to compute, update, and retain the parallax information including the values of P, DX, IntD, and UD for the current frame. The variables and their related computations are described in more detail below and with respect to FIG. 5. P is the parallax set which holds parallax information for each detected point in each frame for a range of frames. In general, the range of frames is contemplated to include one or more prior frames in addition to the current frame, as discussed in further detail below. However, it is also contemplated that the range of frames can also include one or more prior frames and one or more subsequent frames in addition to the current frame. DX is the parallax range set which holds the range of parallax values P from a minimum to a maximum parallax value for all the feature points in an image frame. IntD is the intersection set that includes the parallax range for the processed frames. UD holds the common parallax values for all the processed frames. When the processing of variables P, DX, IntD, and UD is completed, the method proceeds to step S33.

It is contemplated that at least the computed set of variables will be stored in memory or in an associated file to the image file or files or in the same file as the image. Of course, the latter case requires that the parallax information be stored with ancillary image data in such a manner that it is separable from the image.

In off-line processing, in one embodiment, it is desirable to keep all computed parallax information in P in the first pass. When the parallax information is determined in the second pass of the method herein, it can be desirable to utilize only a small range of the parallax set $P_i$ of P to determine best parallax according to requirement. For example, when processing frame i in the second pass, the parallax value set for the m frames can be used on either side of the $i^{th}$ frame, that is, from frame i-m to frame i+m to determine the best parallax value. The value of m can be as small or large as desired. In one example from experimental practice, m is chosen to be a small positive integer, such as m = 5, in order to reduce the effects on storage for the set of parallax information. It should be noted that the ability to compute the parallax information over more than just the current frame will not only affect the parallax set P, but it will also affect the other parallax information such as the parallax range set DX.

At step S33, it is determined whether all stereo pairs (L,R) have been processed. If the decision is determined to be "NO", then the method of FIG. 3 returns to step S31 where another stereo pair will be received for processing. If the decision is determined to be "YES", then the method of FIG. 3 proceeds to step S34 to begin the second pass of processing.

At step S34, the stereo pairs are processed again. Each stereo pair is received as in step S31. When a pair has been received or read in, then the method of FIG.3 proceeds to step S35.

At step S35, the best parallax value is determined from the parallax information and from the requirement or requirements received from the user or producer, for example. The best parallax value is determined by analyzing the parallax information to select a parallax value for the text placement that mutually satisfies the parallax information (i.e., that is, it is included in the parallax values represented by the parallax information of P, DX, IntD, and UD) and the requirement as closely as possible. This concept is explained in more detail below.

In one embodiment of the present invention, a requirement, as described in the examples above, can be formulated as a general function, f, so that the best parallax value, d, for text placement with the associated 3D image is found according to equation three (3), which follows:

$$d = f(P, DX, IntD, UD). \tag{3}$$

That is, the best parallax value, d, is computed from the requirement, $f(\cdot)$, which is dependent on some or all of the parallax information from the parallax parameter values in P, DX, IntD, and UD. From the more detailed description of the parallax information given below, it will be appreciated that the underlying parameter for the requirement function is P since the remaining parameters DX, IntD, and UD can be computed either directly or indirectly from P. Based on this knowledge about the ultimate dependence of all the parallax parameters on P, the formulation for the best parallax value d may be simplified according to equation four (4), which follows:

$$d = f(P). \tag{4}$$

Of course, it will be understood that this simplistic formulation for d encompasses the more rigorous representations that include as many of the parameters derived from P as are needed by a particular requirement.

A number of examples for requirements are described below to promote a better understanding of the manner in which the best parallax value, d, is determined so that text can be placed with the associated 3D image consistent with the requirement. In one example from experimental practice, a requirement is defined for placing the text at a maximum negative parallax for the entire or whole frame. For this example, the best parallax value satisfying the requirement is determined to be d = f(P) = UDmin for the current frame.

In another example from experimental practice, a requirement is defined for placing the text at a maximum negative parallax for a selected region of the entire image in the current frame. For this example, the best parallax value satisfying this new requirement is determined to be then d = f(P,R) = maximum negative parallax in the defined region R of the image. It should be noted that it will be necessary to provide R as an additional parameter with the requirement. It should be understood that the determined best parallax values may not be the maximum negative parallax value of the whole image.

In still another example from experimental practice, a requirement is defined for placing the text at locations relative to the image content that will not block the content and will keep the parallax changes for the text small. By keeping parallax changes small, it is possible to maintain a reasonable comfort level for a viewer reading the text from one image to the next. When implementing the requirement f(·), it is necessary to use parallax information from a number of frames so that the transition from frame to frame for text placement at best parallax values will be smooth and pleasing to a viewer over the frames. Preferably, the frames are consecutive frames. Moreover, in one embodiment of the present invention, the frames can be selected to be prior frames with the current frame or subsequent frames with the current frame or a group of both prior and subsequent frames with the current frame. For this example, the resulting best parallax values in this requirement do not necessarily correspond to a maximum negative parallax. In fact, the best parallax value for each frame can be smaller than a maximum negative parallax value in current frame (that is, larger than the absolute value of maximum negative parallax value) in order to keep the transition smooth for the text placement from one frame to the next. It should be noted that the determined best parallax values may not be the maximum negative parallax value of the whole image.

At the completion of step S35, the method of FIG. 3 proceeds to step S36.

At step S36, the parallax value from step S35 is either stored and/or used immediately to generate the 3D text. The parallax value d can be stored with the image or in an alternate embodiment, in a separate file accompanying the image. It could also be stored with the text file associated with the image. In any case, the parallax value computed in step S35 is ultimately utilized in the generation and placement of the 3D text. It is also contemplated that the best parallax value, d, from step S35 can be stored and then passed to the display unit such as a TV where it is utilized to generate the 3D text.

In one example from experimental practice, when the position of the text in the subtitle or caption, for example, is established for the left (right) view, then it is straightforward to use the best parallax value from step S35 and the position of the text in the left (right) view to place and generate the 3D text in the other view using the parallax equation given above. In various embodiments of the present invention, the position discussed above can be an absolute position in the view or a relative position that is determined with respect to a known point of reference in the particular view. For example, the relative position can be selected as a particular corner, such as the top left corner, of the view. At the completion of step S36, the method of FIG. 3 proceeds to step S37.

At step S37, it is determined whether all stereo pairs (L,R) have been processed in the second pass. If the decision is determined to be "NO", then the method of FIG. 3 returns to step S34 where another stereo pair will be received for second pass processing. If the decision is determined to be "YES", then the method of FIG. 3 proceeds to step S38 where the process ends.

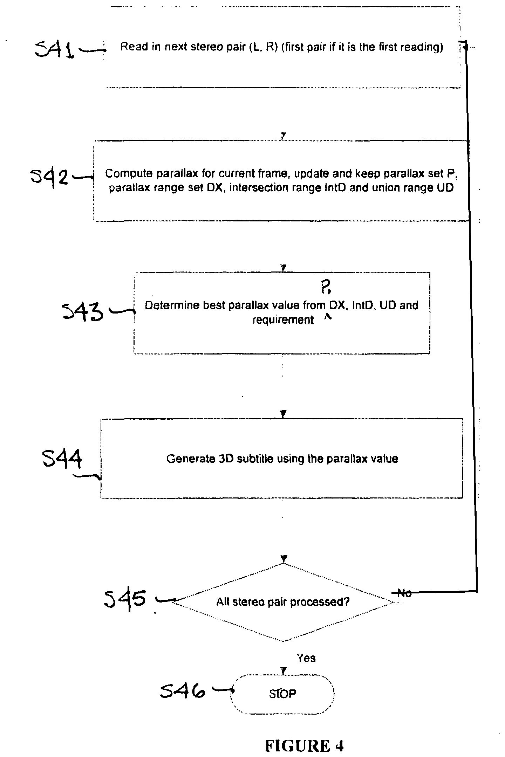

In FIG. 4, an exemplary method is shown for determining the 3D text positioning using on-line processing. In the off-line processing method described above with respect to FIG. 3, it is assumed that all data from the images are available. This assumption affords one the opportunity to run the passes of the method separately on all the frames at once. For on-line processing, decisions can be made only when new image frames are received and available for processing. In contrast to the off-line processing method shown in FIG. 3, the method in FIG. 4 stores all the information that has been collected and determined and then makes a decision on parallax based on existing information and requirements.

It will be appreciated by persons skilled in the art that the method of FIG. 4 may be applied to off-line image processing and 3D text positioning. Although it is expected that the method of FIG. 3 would not be as efficient as the process set forth in FIG. 3 for such off-line processing.

FIG. 4 depicts a flow chart of a method for determining, on-line, a best parallax value for use in displaying text with 3D content in accordance with an embodiment of the present invention. That is, the method in FIG. 4 is shown as a single pass technique for each image. The method of FIG. 4 begins in step S41, in which a stereo pair (L,R) of image information is received or read for processing. As mentioned above, the stereo pair that is read into the step typically includes a left view and a right view, as described above. The method of FIG. 4 then proceeds to step S42.

At step S42, the necessary processing is performed to compute, update, and retain the parallax information for the current frame including the values of P, DX, IntD, and UD. Step S42 operates in a manner similar to step S32, described above. The variables and their related computations are described in more detail below with respect to FIG. 5. When the processing to compute, update, and retain variables P, DX, IntD, and UD is completed, the method of FIG. 4 proceeds to step S43. As described above, it is contemplated that at least the computed set of variables will be stored in memory or in an associated file to the image file or files or in the same file as the image.

In online processing, due to possible storage space limitations and potential processing time limitations, it may be desirable to utilize a smaller number of frames in determining a best parallax value for the text. Unlike off-line processing where all prior and subsequent frames are generally available, it is usually possible to have access only to prior frames for on-line processing of the current frame since frames subsequent to the current frame have not yet been received.

It should be noted that any limitations that pertain to the set of parallax values P will also affect the remaining parallax information since DX, IntD, and UD are all derived directly or indirectly from P and its $P_i$ components.

At step S43, the best parallax value is determined from the parallax information and from the requirement or requirements received from the user or producer, for example. Step S43 operates in a manner similar to step S35, described above. An exemplary technique for determining the best parallax value is described above with respect to step S35 in FIG. 3. The method of FIG. 4 then proceeds to step S44.

At step S44, the 3D text such as a subtitle or caption is then generated and positioned for display with the 3D image content using the parallax value determined in step S43. The method of FIG.4 then proceeds to step S45.

At step S45, it is determined whether all stereo pairs (L,R) have been processed. If the decision is determined to be "NO", then the method of FIG. 4 returns to step S41 where another stereo pair will be received for processing. If the decision is determined to be "YES", then the method of FIG. 4 proceeds to step S446 where the process ends.

FIG. 5 depicts a simplified process for feature correspondence and parallax value determination for use in the methods of FIG. 3 and FIG 4. That is, FIG. 5 shows an exemplary parallax computation technique for use in processing of (L,R) pairs to determine a best parallax value based on one or more supplied requirements together with derived parallax information from the received image itself. The technique of FIG. 5 has been used in the steps described above with reference to the methods shown in FIG. 3 and FIG. 4.

The technique shown is FIG. 5 has been explained in detail in the related application identified above, namely, U.S. Patent Application Attorney Docket No. PU090183 entitled "*Method For Distinguishing A 3D Image From A 2D Image And For Identifying The Presence Of A 3D Image Format By Feature Correspondence Determination*".

The method of FIG. 5 begins at step S51 in which the stereo pair of image information (L,R) is received. Typically, the stereo pair that is received includes a left view and a right view, as described above. Additionally, the parallax information DX, IntD, and UD are received with the image information (content). In various embodiments of the present invention, the method of FIG. 5 can be initialized so that all the parallax information variables are set to an initial value, such as zero. DX is the parallax set. The intersection set is IntD and the union set is UD. DX contains a parallax range for at least the current frame and even for one or more previously processed frames. IntD contains the parallax range for all processed frames. UD contains the common parallax for all processed frames. At the completion of step S51, the method of FIG. 5 proceeds to steps S52 and S53.

At steps S52 and S53, feature detection is performed in the separate views of the image pair (L,R). The features detected from image, L, in step S52 are identified as, F1 = $\{F1_i \mid i=1...n_1\}$, and the resulting features detected from image R in step S53 are identified as, F2= $\{F2_i \mid i= 1...n_2\}$, where $n_1$ and $n_2$ are the number of features found in each respective image. After each of steps S52 and S53, the method of FIG. 5 proceeds to step S54.

Feature correspondence based methods detect features and establish a one-by-one correspondence between detected features. It is also contemplated in accordance with various embodiments of the present invention that feature tracking can be used instead of feature detection and feature correspondence in the steps above and below. In an example from experimental practice, the KLT feature tracking method has been used in the execution of steps S52 and S53. These techniques are well known in the art and are fully described in references cited herein below.

At step S54, feature correspondences (matching) are found between the resulting features F1 in view L from step S52 and F2 in view R from step S53. The feature correspondence or matching process in this step generally removes those features in one image with no correspondences to features in the other image. When the features are removed from each feature set F1 and F2, the new or remaining feature points in L can be characterized according to equation five (5), which follows:

$$NF1= \{NF1_i \mid i=1...N\}, \tag{5}$$

and new or remaining feature points in R can be characterized according to equation five (6), which follows:

$$NF2= \{NF2_i \mid i=1...N\}, \qquad\qquad (6)$$

where N is the total number of features having correspondences. A pair designated as $(NF1_i, NF2_i)$ identifies a pair of matching feature points found in both the L view and the R view. Feature correspondence and matching is believed to be well known in the art and will not be described in detail herein. Several references, disclose a number of the correspondence and selection techniques applied to image features. At the completion of step S54, the method of FIG. 5 proceeds to step S55.

As mentioned above, it is contemplated that feature correspondence can be performed using feature tracking. In various embodiments of the present invention, feature detection and feature correspondence computation have been used to find matching features as shown in steps S52, S53, and S54. However, feature matching or correspondence can be implemented as feature tracking instead, as shown below. First, features in L are computed. Then, features computed in L are used as initial feature positions in R to track features in R. Finally, the features in R that are tracked are then determined to correspond to the features in L. Features lost in tracking in R are to be removed.

Although the KLT tracking method was employed in the experimental practice of the inventive method, the method herein does not adopt a specific feature matching or correspondence algorithm as a preferred technique since many feature matching algorithms are contemplated for use by this inventive method. Several feature tracking methods such as the KLT tracking method are taught both in a technical article by Bruce D. Lucas and Takeo Kanade, entitled "An Iterative Image Registration Technique with an Application to Stereo Vision", presented at the International Joint Conference on Artificial Intelligence at pages 674-679 in 1981 and in a report by Carlo Tomasi and Takeo Kanade, entitled "Detection and Tracking of Point Features" in Carnegie Mellon University Technical Report CMU-CS-91-132 published in April 1991. A point feature detection method known as the SIFT method is disclosed in an article by David Lowe entitled "Object recognition from local scale-invariant features" published in the Proceedings of the international Conference on Computer Vision in 1999 at pages 1150-1157. Several different feature detection and matching methods useful in performing feature correspondence are described in a work by A. Ardeshir Goshtasby entitled "2-D and 3-D image registration: for medical, remote sensing and industrial applications", published by Wiley-Interscience in 2005, particularly in Chapter 3 for feature selection at pages 42-63 and in Chapter 4 for feature correspondence at pages 63-106.

At step S55, the position difference is computed between corresponding feature pairs (NF1i, NF2i) for each pair *i* identified in the (L,R) views. This computation is performed to determine the parallax set P and the parallax range DX for the image. In this computation, the position of a feature point $NF1_i$ is defined as $(x_{i1},y_{i1})$ and the position of a feature point $NF2_i$ is defined as $(x_{i2},y_{i2})$. In this example, the positions are chosen to be relative to a common point in both images. In one example, the common point in both images could be selected as a left-top corner viewed as the origin. It should be noted that in various embodiments of the present invention, absolute positions could be used rather than relative positions. Moreover, in various embodiments of the present invention, other locations in an image could be used a c common reference point or origin.

The sets of screen parallax $P_i$ for the $i^{th}$ frame can then be determined as $P_i = \{P_j= x_{2j} - x_{1j} \mid j=1 ...N\}$. The maximum and minimum values of screen parallax computed as Pmax and Pmin, respectively, can then be updated iteratively with each P computation so that $Pmax=max(P_i)$ and $Pmin=min(P_i)$. When this computation is completed for all the features in the image pair, the method of FIG. 5 proceeds to step S56.

The set of screen parallax P can be determined for the current frame alone. It is also contemplated that the screen parallax set P can be determined over a number of frames i, where i may include a desired number of prior frames or a desired number of both prior and subsequent frames. The latter case is typically possible for off-line processing because all the frames are generally available. On-line processing may not allow subsequent frame information to be used because the subsequent frames usually have not been, or can not be, received at the time that the current frame is being processed.

The number of frames that are or can be included in the computation of the parallax set P is dependent on each individual implementation. In off-line processing, storage space is generally not a limiting issue. So it may be desirable to determine P over as many frames as possible, such as over all available frames, for the off-line case. In on-line processing, storage space may be more limited and available processing time may be constrained in order to maintain a proper on-line or real time viewing environment. Hence, it may be desirable in on-line processing for determine and maintain the parallax information set P over a smaller number of frames.

At this point, at step S56 the calculation of the parallax information DX, IntD, and UD can be updated and completed as follows. The updated parallax range DX is determined as: DX = (Pmin, Pmax).

The variables DX and P are quite different. DX, the parallax range set, is typically represented as a one dimensional array. For each frame i, there is a parallax range $DX_i$ which is represented as the value set $[minP_i, maxP_i]$, where Pi are the parallax values in frame i.

P, the parallax value set, is usually represented as a two dimensional array. $P_i$ is an array of parallax values for each feature point for frame i. $P_{ij}$ is the parallax value for feature point j in frame i. As such, when P is stored, it can be desirable to also maintain feature point positions in left (or right) image for each frame together with their corresponding parallax values.

The intersection of the minimum DX, IntDmin, and the intersection of the maximum DX, IntDmax, can then be characterized according to equations seven (7) and eight (8), which follow:

$$IntDmin=max (IntDmin,Pmin); \qquad (7)$$

$$IntDmax= min (intDmax,Pmax). \qquad (8)$$

The calculation defined above permits the value of the intersection IntDmin to be replaced by the maximum one of either the previous value of IntDmin or the current value of Pmin. Similarly, the calculation defined above for IntDmax permits the value of the intersection IntDmax to be replaced by the minimum one of either the previous value of IntDmax or the current value of Pmax. In this way, the value of IntD can be defined as IntD=(IntDmin, IntDmax).

In a similar type of computation, UD is defined as (UDmin,UDmax), in which,
UDmin=min (UDmin,Pmin); and
UDmax=max (UDmax,Pmax).

The calculation defined above permits the value of the union UDmin to be replaced by the minimum one of either the previous value of UDmin or the current value of Pmin. Similarly, the calculation defined above for UDmax permits the value of the union UDmax to be replaced by the maximum one of either the previous value of UDmax or the current value of Pmax.

At the completion of the computations in step S54-S56, the values of P, DX, IntD, and UD are stored for later use. In accordance with various embodiments of the present invention, these values can be stored in temporary storage in the processor, or they can be stored in a more permanent form such as in a storage medium or file associated with the image frame. As standards evolve for the use of such parallax information, it is contemplated that the parallax information can even be stored in the image files themselves.

The method of FIG. 5 then proceeds to step S57 during which the method of FIG. 5 is exited.

In the descriptions above, it should be noted that the values of DX, IntD, and UD are computed directly or indirectly - as shown above - from the parallax set P for an entire image frame. In various embodiments of the present invention, the computations for the best parallax value for placing text in the 3D image of a frame are generally intended to use most, if not all, of the parameters P, DX, IntD, and UD. For example, when the requirement is based on a substantially complete image, then it may be sufficient and, therefore, desirable to use a subset of parallax information including DX, IntD, and UD to compute the best parallax value for the text in each frame. On the other hand, when the requirement is based on only a portion of the image frame, it is preferred to use the entire set of parallax information including parameter values for P, DX, IntD, and UD. It is contemplated within the various embodiments of the present invention that other types of requirements will determine the set of parallax parameters needed to place the text properly with respect to the 3D image. For example, it is expected that the complete set of parallax information (P, DX, IntD, and UD) should be used for determining text placement with the associated 3D image to insure the visibility of text and image and, thereby, avoid occlusions thereof. Even though it is possible to use the complete set of parallax information for text placement for every implementation and requirement, the number and type of parallax information parameters needed for each determination of text placement can be tailored at least in part to be implementation and requirement dependent in accordance with the various embodiments of the present invention.

It has been determined herein that the order in which the L and R views are defined and used is not important in the feature detection and feature correspondence step. However, when the parallax computation steps are performed, it is important to maintain the identification and order of the L and R views of the image.

Having described various embodiments for a method and system for the identifying 3D image formats (which are intended to be illustrative and not limiting), it is noted that modifications and variations can be made by persons skilled in the art in light of the above teachings. It is therefore to be understood that changes may be made in the particular embodiments of the invention disclosed which are within the scope of the claims.

## Claims

1. A method for combining text with three-dimensional (3D) image content wherein a resulting image is capable of being displayed by a 3D display device, the method comprising:

receiving (S31) both said 3D image content including at least one 3D image and text associated with said at least one 3D image, wherein the at least one 3D image includes a first view and a second view;

determining (S35) a parallax information based on a combination of the parallax information extracted from said at least one 3D image and the parallax information extracted from one or more images prior to said at least one 3D image;

inserting (S36) the text in a desired location in said first view of said at least 3D image; and

determining (S36) a position for the text in said second view, wherein the position in said second view is offset relative to the position in the first view of the corresponding 3D image by an amount based, at least in part, on said parallax information;

the method being **characterized in that** it further comprises:

receiving parallax restrictions for identifying a desired placement of the text relative to the 3D image content; and

wherein said amount of offset for said position of the text in said second view is also based, at least in part, on said parallax restrictions.

2. Apparatus for combining text with three-dimensional (3D) image content wherein a resulting image is capable of being displayed by a 3D display device, the apparatus comprising:

means (22) for receiving both said 3D image content including at least one 3D image and text associated with said at least one 3D image, wherein the at least one 3D image includes a first view and a second view;

means (22) for determining a parallax information based on a combination of the parallax information extracted from said at least one 3D image and the parallax information extracted from one or more images prior to said at least one 3D image;

means (38) for inserting the text in a desired location in said first view of said at least 3D image; and

means (38) for determining a position for the text in said second view, wherein the position in said second view is offset relative to the position in the first view of the corresponding 3D image by an amount based, at least in part, on said parallax information;

means for receiving parallax restrictions for identifying a desired placement of the text relative to the 3D image content; and

wherein said amount of offset for said position of the text in said second view is also based, at least in part, on said parallax restrictions.

3. A machine-readable medium (24) having one or more executable instructions stored thereon, which when executed by a digital processing system causes the digital processing system to perform a method for combining text with three-dimensional (3D) image content wherein a resulting image is capable of being displayed by a 3D display device, the method comprising

receiving (S31) both said 3D image content including at least one 3D image and text associated with said at least one 3D image, wherein the at least one 3D image includes a first view and a second view;

determining (S35) a parallax information based on a combination of the parallax information extracted from said at least one 3D image and the parallax information extracted from one or more images prior to said at least one 3D image;

inserting (S36) the text in a desired location in said first view of said at least 3D image; and

determining (S36) a position for the text in said second view, wherein the position in said second view is offset relative to the position in the first view of the corresponding 3D image by an amount based, at least in part, on said parallax information; said machine-readable medium being **characterized in that** the method further comprising:

receiving parallax restrictions for identifying a desired placement of the text relative to the 3D image content; and

wherein said amount of offset for said position of the text in said second view is also based, at least in part, on said parallax restrictions.

4. The method as defined in claim 1, further comprising:

processing said first and second views of the at least one 3D image content, having the text positioned therein for each view, to display a combination of the text and related 3D image content on said 3D display device.

5. The method as defined in claim 1, further comprising:
storing said parallax information associatively with the 3D image content from which it was extracted and the text related to the 3D image content.

6. The method as defined in claim 5, further comprising:
processing said first and second views of the at least one 3D image content, having the text positioned therein for each view, to display a combination of the text and related 3D image content on said 3D display device.

7. The method as defined in claim 1, further comprising:
storing said amount of offset associatively with the 3D image content from which it was extracted and the text related to the 3D image content.

8. The method as defined in claim 7, further comprising:
processing said first and second views of the at least one 3D image content, having the text positioned therein for each view, to display a combination of the text and related 3D image content on said 3D display device.

9. The method as defined in claim 1, wherein said parallax information comprises a set of parallax values (P), a parallax range set (DX), an intersection set of parallax values (IntD), and a union set of parallax values (UD).

10. The method as defined in claim 9, wherein said extracting further comprises:

detecting at least one pair of corresponding features in the first and second views of said 3D image content;
extracting said parallax information for the at least one pair of corresponding features;
comparing the extracted parallax information for the pair of corresponding features with existing parallax information resulting after the extraction for a prior pair of corresponding features to determine whether to update said existing parallax information; and
updating said existing parallax information with at least some portion of the currently extracted parallax information, when it is determined that updating is necessary, so that updated parallax information replaces the existing parallax information.

11. The method as defined in claim 1, wherein said extracting further comprises:

retaining parallax information from said at least one 3D image content as existing parallax information;
extracting parallax information from an at least second 3D image content;
updating the existing parallax information from the at least one 3D image content with at least some portion of the extracted parallax information for the at least second 3D image content, when it is determined that updating is necessary, so that updated parallax information replaces the existing parallax information.

12. The method as defined in claim 9, wherein said extracting further comprising:
determining said parallax information based upon a combination of parallax information extracted from said at least 3D image, parallax information extracted from one or more images prior of said at least 3D image, and parallax information extracted from one or more images subsequent to said at least 3D image.

13. The method as defined in claim 1, wherein said at least one parallax restrictions is selected from the group consisting of placing said text at a predetermined parallax value for an entire image, placing said text at a predetermined parallax value for a selected region of an image, and placing said text to avoid blocking said content and to limit an amount of change for consecutive parallax values to be small.

**Patentansprüche**

1. Verfahren zum Kombinieren von Text mit Inhalt eines dreidimensionalen Bilds (3D-Bilds), wobei ein resultierendes Bild durch eine 3D-Anzeigevorrichtung angezeigt werden kann, wobei das Verfahren umfasst:

Empfangen (S31) sowohl des 3D-Bild-Inhalts einschließlich mindestens eines 3D-Bilds als auch von Text, der dem mindestens einen 3D-Bild zugeordnet ist, wobei das mindestens eine 3D-Bild eine erste Ansicht und eine zweite Ansicht enthält;

Bestimmen (S35) einer Parallaxeninformationen auf der Grundlage einer Kombination die Parallaxeninformationen, die aus dem mindestens einen 3D-Bild extrahiert werden, und die Parallaxeninformationen, die aus einem oder mehreren Bildern vor dem mindestens einen 3D-Bild extrahiert werden;

Einfügen (S36) des Texts an einen gewünschten Ort in der ersten Ansicht des mindestens 3D-Bilds; und

Bestimmen (S36) einer Position für den Text in der zweiten Ansicht, wobei die Position in der zweiten Ansicht relativ zu der Position in der ersten Ansicht des entsprechenden 3D-Bilds um einen Betrag, der mindestens teilweise auf den Parallaxeninformationen beruht, versetzt ist;

wobei das Verfahren **dadurch gekennzeichnet ist, dass** es ferner umfasst:

Empfangen von Parallaxenbeschränkungen zum Identifizieren einer gewünschten Anordnung des Texts relativ zu dem 3D-Bild-Inhalt; und

wobei der Betrag des Versatzes für die Position des Texts in der zweiten Ansicht mindestens teilweise ebenfalls auf den Parallaxenbeschränkungen beruht.

2. Vorrichtung zum Kombinieren von Text mit Inhalt eines dreidimensionalen Bilds (3D-Bilds), wobei ein resultierendes Bild durch eine 3D-Anzeigevorrichtung angezeigt werden kann, wobei die Vorrichtung umfasst:

Mittel (22) zum Empfangen sowohl des 3D-Bild-Inhalts einschließlich mindestens eines 3D-Bilds als auch von Text, der dem mindestens einen 3D-Bild zugeordnet ist, wobei das mindestens eine 3D-Bild eine erste Ansicht und eine zweite Ansicht enthält;

Mittel (22) zum Bestimmen einer Parallaxeninformationen auf der Grundlage einer Kombination die Parallaxeninformationen, die aus dem mindestens einen 3D-Bild extrahiert werden, und die Parallaxeninformationen, die aus einem oder mehreren Bildern vor dem mindestens einen 3D-Bild extrahiert werden;

Mittel (38) zum Einfügen des Texts an einen gewünschten Ort in der ersten Ansicht des mindestens 3D-Bilds; und

Mittel (38) zum Bestimmen einer Position für den Text in der zweiten Ansicht, wobei die Position in der zweiten Ansicht relativ zu der Position in der ersten Ansicht des entsprechenden 3D-Bilds um einen Betrag, der mindestens teilweise auf den Parallaxeninformationen beruht, versetzt ist;

Mittel zum Empfangen von Parallaxenbeschränkungen zum Identifizieren einer gewünschten Anordnung des Texts relativ zu dem 3D-Bild-Inhalt; und

wobei der Betrag des Versatzes für die Position des Texts in der zweiten Ansicht mindestens teilweise ebenfalls auf den Parallaxenbeschränkungen beruht.

3. Maschinenlesbares Medium (24), in dem eine oder mehrere ausführbare Anweisungen gespeichert sind, die, wenn sie durch ein digitales Verarbeitungssystem ausgeführt werden, veranlassen, dass das digitale Verarbeitungssystem ein Verfahren zum Kombinieren von Text mit Inhalt eines dreidimensionalen Bilds (3D-Bilds) ausführt, wobei ein resultierendes Bild durch eine 3D-Anzeigevorrichtung angezeigt werden kann, wobei das Verfahren umfasst:

Empfangen (S31) sowohl des 3D-Bild-Inhalts einschließlich mindestens eines 3D-Bilds als auch von Text, der dem mindestens einen 3D-Bild zugeordnet ist, wobei das mindestens eine 3D-Bild eine erste Ansicht und eine zweite Ansicht enthält;

Bestimmen (S35) einer Parallaxeninformationen auf der Grundlage einer Kombination die Parallaxeninformationen, die aus dem mindestens einen 3D-Bild extrahiert werden, und die Parallaxeninformationen, die aus einem oder mehreren Bildern vor dem mindestens einen 3D-Bild extrahiert werden;

Einfügen (S36) des Texts an einen gewünschten Ort in der ersten Ansicht des mindestens 3D-Bilds; und

Bestimmen (S36) einer Position für den Text in der zweiten Ansicht, wobei die Position in der zweiten Ansicht relativ zu der Position in der ersten Ansicht des entsprechenden 3D-Bilds um einen Betrag, der mindestens teilweise auf den Parallaxeninformationen beruht, versetzt ist; wobei das maschinenlesbare Medium **dadurch gekennzeichnet ist, dass** das Verfahren ferner umfasst:

Empfangen von Parallaxenbeschränkungen zum Identifizieren einer gewünschten Anordnung des Texts relativ zu dem 3D-Bild-Inhalt; und

wobei der Betrag des Versatzes für die Position des Texts in der zweiten Ansicht mindestens teilweise ebenfalls auf den Parallaxenbeschränkungen beruht.

4. Verfahren nach Anspruch 1, ferner umfassend:

Verarbeiten der ersten und der zweiten Ansicht des mindestens einen 3D-Bild-Inhalts, in dem der Text darin für jede Ansicht positioniert ist, um eine Kombination des Texts und des zugehörigen 3D-Bild-Inhalts auf der 3D-Anzeigevorrichtung anzuzeigen.

5. Verfahren nach Anspruch 1, ferner umfassend:
Speichern der Parallaxeninformationen zugeordnet zu dem 3D-Bild-Inhalt, von dem sie extrahiert wurden, und zu dem Text, der sich auf den 3D-Bild-Inhalt bezieht.

6. Verfahren nach Anspruch 5, ferner umfassend:
Verarbeiten der ersten und der zweiten Ansicht des mindestens einen 3D-Bild-Inhalts, in dem der Text darin für jede Ansicht positioniert ist, um eine Kombination des Texts und des zugehörigen 3D-Bild-Inhalts auf der 3D-Anzeigevorrichtung anzuzeigen.

7. Verfahren nach Anspruch 1, ferner umfassend:
Speichern des Betrags des Versatzes zugeordnet zu dem 3D-Bild-Inhalt, von dem er extrahiert wurde, und zu dem Text, der sich auf den 3D-Bild-Inhalt bezieht.

8. Verfahren nach Anspruch 7, ferner umfassend:
Verarbeiten der ersten und der zweiten Ansicht des mindestens einen 3D-Bild-Inhalts, in dem der Text darin für jede Ansicht positioniert worden ist, um eine Kombination des Texts und des zugehörigen 3D-Bild-Inhalts auf der 3D-Anzeigevorrichtung anzuzeigen.

9. Verfahren nach Anspruch 1, wobei die Parallaxeninformationen eine Menge von Parallaxenwerten (P), eine Parallaxenbereichsmenge (DX), eine Schnittmenge von Parallaxenwerten (IntD) und eine Vereinigungsmenge von Parallaxenwerten (UD) umfassen.

10. Verfahren nach Anspruch 9, wobei das Extrahieren ferner umfasst:

Detektieren mindestens eines Paars entsprechender Merkmale in der ersten und in der zweiten Ansicht des 3D-Bild-Inhalts;
Extrahieren der Parallaxeninformationen für das mindestens eine Paar entsprechender Merkmale;
Vergleichen der extrahierten Parallaxeninformationen für das Paar entsprechender Merkmale mit vorhandenen Parallaxeninformationen, die sich nach der Extraktion für ein früheres Paar entsprechender Merkmale ergeben, um zu bestimmen, ob die vorhandenen Parallaxeninformationen aktualisiert werden müssen; und
Aktualisieren der vorhandenen Parallaxeninformationen mit mindestens einem Teil der gegenwärtig extrahierten Parallaxeninformationen, wenn bestimmt wird, dass das Aktualisieren notwendig ist, so dass aktualisierte Parallaxeninformationen die vorhandenen Parallaxeninformationen ersetzen.

11. Verfahren nach Anspruch 1, wobei das Extrahieren ferner umfasst:

Behalten von Parallaxeninformationen von dem mindestens einen 3D-Bild-Inhalt als vorhandene Parallaxeninformationen;
Extrahieren von Parallaxeninformationen von mindestens einem zweiten 3D-Bild-Inhalt;
Aktualisieren der vorhandenen Parallaxeninformationen von dem mindesten einen 3D-Bild-Inhalt mit mindestens einem Teil der extrahierten Parallaxeninformationen für den mindestens zweiten 3D-Bild-Inhalt, wobei bestimmt wird, dass das Aktualisieren notwendig ist, so dass aktualisierte Parallaxeninformationen die vorhandenen Parallaxeninformationen ersetzen.

12. Verfahren nach Anspruch 9, wobei das Extrahieren ferner umfasst:
Bestimmen der Parallaxeninformationen auf der Grundlage einer Kombination von Parallaxeninformationen, die aus dem mindestens 3D-Bild extrahiert wurden, von Parallaxeninformationen, die aus einem oder mehreren Bildern vor dem mindestens 3D-Bild extrahiert wurden, und von Parallaxeninformationen, die aus einem oder mehreren Bildern nach dem mindestens 3D-Bild extrahiert wurden.

13. Verfahren nach Anspruch 1, wobei die mindestens eine Parallaxenbeschränkung aus der Gruppe ausgewählt wird, die aus dem Anordnen des Texts bei einem vorgegebenen Parallaxenwert für ein gesamtes Bild, aus dem Anordnen des Texts bei einem vorgegebenen Parallaxenwert für ein ausgewähltes Gebiet eines Bilds und aus dem Anordnen des Texts in der Weise, dass vermieden wird, dass er den Inhalt versperrt und dass ein Betrag der Änderung für nachfolgende Parallaxenwerte darauf beschränkt wird, klein zu sein, besteht.

**Revendications**

1. Procédé de combinaison d'un texte avec un contenu d'image tridimensionnelle (3D) dans lequel une image obtenue peut être affichée par un dispositif d'affichage 3D, le procédé comprenant :

   la réception (S31) à la fois dudit contenu d'image 3D incluant au moins une image 3D et un texte associé à ladite au moins une image 3D, où la au moins une image 3D inclut une première vue et une seconde vue ;
   la détermination (S35) d'une information de parallaxe d'après une combinaison de l'information de parallaxe extraite de ladite au moins une image 3D et de l'information de parallaxe extraite d'une ou de plusieurs images antérieures à ladite au moins une image 3D ;
   l'insertion (S36) du texte à un emplacement souhaité dans ladite première vue de ladite au moins une image 3D ; et
   la détermination (S36) d'une position pour le texte dans ladite seconde vue, où la position dans ladite seconde vue est décalée par rapport à la position dans la première vue de l'image 3D correspondante d'une valeur basée, au moins en partie, sur lesdites informations de parallaxe ;

   le procédé étant **caractérisé en ce qu'**il comprend en outre :

   la réception de restrictions de parallaxe pour identifier un positionnement souhaité du texte par rapport au contenu d'image 3D ; et
   dans lequel ladite valeur de décalage pour ladite position du texte dans ladite seconde vue est également basée, au moins en partie, sur lesdites restrictions de parallaxe.

2. Appareil de combinaison d'un texte avec un contenu d'image tridimensionnelle (3D) dans lequel une image obtenue peut être affichée par un dispositif d'affichage 3D, l'appareil comprenant :

   un moyen (22) pour recevoir à la fois ledit contenu d'image 3D incluant au moins une image 3D et un texte associé à ladite au moins une image 3D, où la au moins une image 3D inclut une première vue et une seconde vue ;
   un moyen (22) pour déterminer une information de parallaxe d'après une combinaison de l'information de parallaxe extraite de ladite au moins une image 3D et de l'information de parallaxe extraite d'une ou de plusieurs images antérieures à ladite image 3D ;
   un moyen (38) pour insérer le texte à un emplacement souhaité dans ladite première vue de ladite au moins une image 3D ; et
   un moyen (38) pour déterminer une position pour le texte dans ladite seconde vue, où la position dans ladite seconde vue est décalée par rapport à la position dans la première vue de l'image 3D correspondante d'une valeur basée, au moins en partie, sur lesdites informations de parallaxe ;
   un moyen pour recevoir des restrictions de parallaxe pour identifier un positionnement souhaité du texte par rapport au contenu d'image 3D ; et
   dans lequel ladite valeur de décalage pour ladite position du texte dans ladite seconde vue est également basée, au moins en partie, sur lesdites restrictions de parallaxe.

3. Support lisible sur une machine (24) sur lequel sont stockées une ou plusieurs instructions exécutables qui, lorsqu'elles sont exécutées par un système de traitement numérique, indiquent au système de traitement numérique d'exécuter un procédé pour combiner un texte avec un contenu d'image tridimensionnelle (3D), dans lequel une image obtenue peut être affichée par un dispositif d'affichage 3D, le procédé comprenant

   la réception (S31) à la fois dudit contenu d'image 3D incluant au moins une image 3D et un texte associé à ladite au moins une image 3D, où la au moins une image 3D inclut une première vue et une seconde vue ;
   la détermination (S35) d'une information de parallaxe d'après une combinaison de l'information de parallaxe extraite de ladite au moins une image 3D et de l'information de parallaxe extraite d'une ou de plusieurs images antérieures à ladite au moins une image 3D ;
   l'insertion (S36) du texte à un emplacement souhaité dans ladite première vue de ladite au moins une image 3D ; et
   la détermination (S36) d'une position pour le texte dans ladite seconde vue, où la position dans ladite seconde vue est décalée par rapport à la position dans la première vue de l'image 3D correspondante d'une valeur basée, au moins en partie, sur lesdites informations de parallaxe ; ledit support lisible sur une machine étant **caractérisé en ce que** le procédé comprend en outre :

la réception de restrictions de parallaxe pour identifier un positionnement souhaité du texte par rapport au contenu d'image 3D ; et

dans lequel ladite valeur de décalage pour ladite position du texte dans ladite seconde vue est également basée, au moins en partie, sur lesdites restrictions de parallaxe.

4. Procédé tel que défini dans la revendication 1, comprenant en outre :
le traitement desdites première et seconde vues du au moins un contenu d'image 3D, dans lequel le texte est positionné pour chaque vue, pour afficher une combinaison du texte et du contenu d'image 3D sur ledit dispositif d'affichage 3D.

5. Procédé tel que défini dans la revendication 1, comprenant en outre :
le stockage desdites informations de parallaxe en association avec le contenu d'image 3D à partir duquel elles ont été extraites et le texte associé au contenu d'image 3D.

6. Procédé tel que défini dans la revendication 5, comprenant en outre :
le traitement desdites première et seconde vues du au moins un contenu d'image 3D, dans lequel le texte est positionné pour chaque vue, pour afficher une combinaison du texte et du contenu d'image 3D sur ledit dispositif d'affichage 3D.

7. Procédé tel que défini dans la revendication 1, comprenant en outre :
le stockage de ladite valeur de décalage en association avec le contenu d'image 3D à partir duquel elle a été extraite et le texte associé au contenu d'image 3D.

8. Procédé tel que défini dans la revendication 7, comprenant en outre :
le traitement desdites première et seconde vues du au moins un contenu d'image 3D, dans lequel le texte est positionné pour chaque vue, pour afficher une combinaison du texte et du contenu d'image 3D sur ledit dispositif d'affichage 3D.

9. Procédé tel que défini dans la revendication 1, dans lequel lesdites informations de parallaxe comprennent un ensemble de valeurs de parallaxe (P), un ensemble de plages de parallaxe (DX), un ensemble d'intersections de valeurs de parallaxe (IntD) et un ensemble d'unions de valeurs de parallaxe (UD).

10. Procédé tel que défini dans la revendication 9, dans lequel ladite extraction comprend en outre :

la détection d'au moins une paire de fonctions correspondantes dans les première et seconde vues dudit contenu d'image 3D ;
l'extraction desdites informations de parallaxe pour la au moins une paire de fonctions correspondantes ;
la comparaison des informations de parallaxe extraites pour la paire de fonctions correspondantes avec les informations de parallaxe existantes obtenues après l'extraction pour une paire antérieure de fonctions correspondantes afin de déterminer si lesdites informations de parallaxe existantes doivent être mises à jour ; et
la mise à jour desdites informations de parallaxe existantes avec au moins une partie des informations de parallaxe actuellement extraites, lorsqu'il est déterminé qu'une mise à jour est nécessaire, afin que les informations de parallaxe mises à jour remplacent les informations de parallaxe existantes.

11. Procédé tel que défini dans la revendication 1, dans lequel ladite extraction comprend en outre :

la conservation des informations de parallaxe dudit au moins un contenu d'image 3D comme informations de parallaxe existantes ;
l'extraction d'informations de parallaxe d'au moins un second contenu d'image 3D ;
la mise à jour des informations de parallaxe existantes à partir du au moins un contenu d'image 3D avec au moins une partie des informations de parallaxe extraites pour le au moins un second contenu d'image 3D, lorsqu'il est déterminé qu'une mise à jour est nécessaire, afin que les informations de parallaxe mises à jour remplacent les informations de parallaxe existantes.

12. Procédé tel que défini dans la revendication 9, dans lequel ladite extraction comprend en outre :
la détermination desdites informations de parallaxe d'après une combinaison d'informations de parallaxe extraites de ladite au moins une image 3D, d'informations de parallaxe extraites d'une ou de plusieurs images antérieures à ladite au moins une image 3D et d'informations de parallaxe extraites d'une ou de plusieurs image ultérieures à ladite au moins une image 3D.

13. Procédé tel que défini dans la revendication 1, dans lequel ladite au moins une restriction de parallaxe est sélectionnée à partir du groupe consistant à placer ledit texte à une valeur de parallaxe prédéterminée pour une image entière, à placer ledit texte à une valeur de parallaxe prédéterminée pour une région sélectionnée d'une image et à placer ledit texte pour éviter de bloquer ledit contenu et limiter un nombre de changements des valeurs de parallaxe consécutives à être petit.

10

```
                                                    ┌──────────────┐
                                                    │  Film Print  │
                                                    │     14       │
                                                    └──────┬───────┘
                                                           │
               ┌──────────────┐                    ┌───────▼──────┐
               │   Digital    │                    │   Scanning   │
               │  Film Image  │                    │  Device 12   │
               │      16      │                    └───────┬──────┘
               └──────┬───────┘                            │
                      │                                    │
      ┌───────────────▼────────────────────────────────────▼──────────────┐
      │                          Computer 22                               │
      │   ┌────────────────────────────────────────────────────────────┐  │
      │   │                       Memory 24                             │  │
  ┌───────┤   ┌─────────────────────────────────────────────────────┐  │  │        ┌───────────┐
  │Capture│   │                                                     │  │  │        │   User    │
  │Device │   │              Text                                   │  │  │◄──────►│ Interface │
  │  18   │   │            Processing                               │  │  │        │    26     │
  └───────┤   │            Module 38                                │  │  │        └───────────┘
          │   │                                                     │  │  │
  ┌───────┤   │                                                     │  │  │
  │ Text  │   │                                                     │  │  │
  │ File  │   └─────────────────────────────────────────────────────┘  │  │
  │  20   │   └────────────────────────────────────────────────────────────┘  │
  └───────┤                                                                │
      └───────┬───────────────────────────────────────────┬───────────────┘
              │                                            │
       ┌──────▼──────┐                             ┌───────▼──────┐
       │    Film     │                             │ Digital File │
       │  Printer 30 │                             │     34       │
       └──────┬──────┘                             └───┬──────┬───┘
              │                                        │      │
       ┌──────▼──────┐                      ┌──────────▼─┐  ┌─▼──────────┐
       │   Revised   │                      │  Storage   │  │ 3D Display │
       │   Film 32   │                      │ Device 28  │  │ Device 36  │
       └─────────────┘                      └────────────┘  └────────────┘
```

# Fig. 1

FIGURE 2

S31 | Read in next stereo pair (L, R) (first pair if it is the first reading)

S32 | Compute parallax for current frame, update and keep parallax set P, parallax range set DX, intersection range IntD and union range UD

First pass processing to determine parallax ranges

S33 — All stereo pair processed?

No

Yes

S34 — Re-Read in next stereo pair (L,R) (first pair if it is first reading)

S35 — Determine best parallax value from P, D, IntD, UD obtained in the first pass and requirements

Second pass processing to determine best parallax value for each frame

S36 — Depending on requirement, either store parallax value or generate 3D subtitle using the parallax value

S37 — All stereo pair processed?

No

Yes

S38 — STOP

**FIGURE 3**

**FIGURE 4**

S51 — A stereo pair (L, R) and exiting P,DX, IntD and UD

S52 — Detect features F1 in L

S53 — Detect features F2 in R

S54 — Feature matching between F1 and F2 to get feature correspondence pair (NF1,NF2), update parallax set P for current frame

S55 — Position difference computation between corresponding features pair to get DX

S56 — Compute updated DX, IntD and UD

S57 — STOP

FIGURE 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 2007025947 W

### Non-patent literature cited in the description

• **BRUCE D. LUCAS ; TAKEO KANADE.** An Iterative Image Registration Technique with an Application to Stereo Vision. *International Joint Conference on Artificial Intelligence,* 1981, 674-679
• **CARLO TOMASI ; TAKEO KANADE.** Detection and Tracking of Point Features. *Carnegie Mellon University Technical Report CMU-CS-91-132,* April 1991

• **DAVID LOWE.** Object recognition from local scale-invariant features. *Proceedings of the international Conference on Computer Vision,* 1999, 1150-1157
• **A. ARDESHIR GOSHTASBY.** 2-D and 3-D image registration: for medical, remote sensing and industrial applications. Wiley-Interscience, 2005, 42-63